# EUROPÄISCHE PATENTSCHRIFT

(11) **EP 1 187 892 B1**
(45) Veröffentlichungstag und Bekanntmachung des Hinweises auf die Patenterteilung: **29.12.2004**
(21) Anmeldenummer: 00943792.2
(22) Anmeldetag: 09.06.2000
(51) Int. Cl.: C10J 3/56, B01J 8/26, F28D 15/02

(54) **VORRICHTUNG ZUR VERGASUNG KOHLENSTOFFHALTIGER EINSATZSTOFFE**
DEVICE FOR THE GASIFICATION OF CARBONACEOUS FEEDSTOCK
DISPOSITIF PERMETTANT LA GAZEIFICATION DE CHARGES CARBONEES

(30) Priorität: 09.06.1999 DE 19926202; 09.06.1999 DE 19926201; 09.06.1999 DE 19926203
(43) Veröffentlichungstag der Anmeldung: 20.03.2002
(73) Patentinhaber: Technische Universität München Lehrstuhl für Thermische Kraftanlagen, 85748 München (DE)
(72) Erfinder: KARL, Jürgen, D-85229 Markt Indersdorf (DE)
(74) Vertreter: Winter, Brandl, Fürniss, Hübner, Röss, Kaiser, Polte Partnerschaft
(86) Internationale Anmeldenummer: PCT/EP2000/005364
(87) Internationale Veröffentlichungsnummer: WO 2000/077128

(56) Entgegenhaltungen:
- GB-A- 1 599 398
- GB-A- 2 164 660
- US-A- 4 244 706
- US-A- 4 474 230
- , [Online] XP002149822 Gefunden im Internet: <URL:http://www.ltk.mw.tu-muenchen.de/engl isch/forsch/heatpipereformer/index.html> [gefunden am 2000-10-06]

## Beschreibung

Die Erfindung betrifft eine Vorrichtung zur Vergasung von kohlenstoffhaltigen Einsatzstoffen, wie z. B. Kohle Teer, Teersand, Kunststoffabfälle, Reste aus Papier- und Zellstoffherstellung, Reste aus der petrochemischen Industrie, Elektronikschrott und Schredderleichtfraktion, und insbesondere von biogenen Einsatzstoffen, wie z. B. Ernteabfälle, Energiepflanzen (Miskantus) oder Holzhackschnitzel. Insbesondere dient die Vorrichtung zur Erzeugung von Brenngasen mit einem Heizwert von mindestens 8000 bis 10 000 kJ/m3.

Die energetische Nutzung vorstehend genannter Einsatzstoffe ist derzeit weitgehend auf die Verbrennung beschränkt. Die Technologien zur Vergasung sind überwiegend auf die Erzeugung von Schwachgasen mit einem Heizwert unter 6000 kJ/kg ausgerichtet. Diese Gase sind jedoch für eine Nutzung z. B. in Gasturbinen oder Brennstoffzellen nicht geeignet.

Um Gase mit einem Heizwert von 8000 bis 10 000 kJ/m³ zu erzeugen, muß eine sogenannte allotherme Vergasung durchgeführt werden. Dazu ist es erforderlich, dem zu vergasenden Brennstoff ausreichend externe Wärme auf einem hohen Temperaturniveau von 500 bis 900 Grad Celsius zuzuführen, was bisher mit einem hohen technischen Aufwand verbunden ist.

Ein wesentliches Vergasungsverfahren mit großer Einsatzbreite ist das Wirbelschichtverfahren. Mit diesem Verfahren können auch kleinere Anlagen wirtschaftlich betrieben, jedoch keine hochkalorischen Gase erzeugt werden. Für die allotherme Vergasung in Wirbelschichten werden derzeit im wesentlichen folgende Verfahren und Vorrichtungen untersucht.

### Batelle-Vergaser

Beim Batelle-Vergaser (zweistufige Wirbelschichtvergasung) wird die Reaktionswärme für die Wirbelschicht in einer externen Wirbelschichtverbrennung erzeugt. Die Übertragung der Wärme erfolgt durch Austausch des heißen Sandbettes und ist daher mit einem hohen technischen Aufwand verbunden, vgl. Peter Jansen, Thermische Vergasung von nachwachsenden Roh- und organischen Reststoffen; Institutsberichte der Bundesanstalt für Landwirtschaft, Braunschweig, 1997.

### DMT-Vergaser

Im DMT-Vergaser soll ein wesentlicher Teil der für die Vergasung notwendigen Wärme dadurch eingebracht werden, daß für die Fluidisierung überhitzter Wasserdampf mit einer Temperatur von 750°C verwendet wird. Zusätzlich sollen für die Vergasung von Biomasse Wärmetauscherrohre durch das Wirbelbett geleitet werden, durch die Rauchgas mit einer Temperatur von 1150°C strömt. Der Nachweis, daß mit dieser Vorrichtung Heizwerte von ca. 10 000 kJ/kg erzielbar sind, erscheint nach dem derzeitigen Kenntnisstand kaum möglich. Vorrichtungen, die nach diesem Prinzip arbeiten, sind in den Dokumenten US 5,064,444 und US 5,439,491 offenbart.

Zur Erhöhung des chemischen Umsatzes wurde daher versucht, den Wärmeeintrag in das Wirbelbett durch den Einsatz von Pulsbrennern zu erhöhen, wie in dem Dokument US 5,306,481 offenbart. Dieser Weg ermöglicht prinzipiell einen höheren Wärmeeintrag und somit einen chemischen Umsatz, der für eine allotherme Vergasung erforderlich ist. Der Einsatz von Pulsbrennern ist jedoch relativ aufwendig.

Die GB-A-1599398 schlägt bei der Vergasung von Kohle oder Koks vor, Wärme mittels Wärmeleitrohren ("heat pipes") in die Wirbelschichten einzubringen. Die Eignung einer solchen Anlage für Biomassen ist nicht ersichtlich.

Weiterhin ist aus der US 4,160,720 eine Vorrichtung zur Vergasung von Teersand bekannt, bei der eine Wärmeübertragung in den Reaktionsraum mittels Wärmeleitrohre (Heat-pipes) erfolgt. Bei dieser Vorrichtung durchläuft der Teersand das Reaktionsbett und die Verbrennungszone. Da sich das Pyrolysegas mit dem Rauchgas mischt, verringert sich der Heizwert dieses Gases, das sich nicht für den unmittelbaren Einsatz für Gasturbinen oder für Brennstoffzellen eignet.

Es ist daher die Aufgabe der Erfindung, eine Vorrichtung zur Vergasung von kohlenstoffhaltigen und insbesondere biogenen Einsatzstoffen bereitzustellen, die eine einfache Konstruktion und sichere Arbeitsweise gewährleistet und mit der Brenngase mit einem Heizwert von mindestens 8000 bis 10 000 kJ/m³ erzeugt werden können. Weiter ist es Aufgabe der Erfindung einen für eine solche Vorrichtung besonders geeigneten Wirbelschichtreaktor anzugeben.

Die Aufgabe wird mit einer Vorrichtung nach Anspruch 1 gelöst.

Eine druckaufgeladene Wirbelschichtvergasungskammer weist eine druckfeste Schleuse zur Aufgabe der zu vergasenden Einsatzstoffe auf. Die Wirbelschichtvergasungskammer ist mit einer Filterkammer über einen Verbindungskanal verbunden, so daß das -entstehende Gas von der Wirbelschichtvergasungskammer in die Filterkammer überströmen kann, wo es durch die Filterschicht geleitet wird. Durch eine externe Wärmequelle wird die für die allotherme Vergasung notwendige Wärme bereitgestellt. Mittels einer Wärmeleitrohranordnung (Heatpipes) wird die Wärme aus der externen Wärmequelle in das Vergasungsbett der Wirbelschichtvergasungskammer geleitet, um die für die Vergasung erforderliche Temperatur bereitzustellen.

Gemäß einer bevorzugten Ausführungsform der Erfindung wird die externe Wärme mittels Verbrennung, insbesondere in einer Wirbelschicht-Brennkammer bereitgestellt.

Damit die Filterschicht durch die aus dem Brenngas ausgefilterten Stoffe nicht anwächst, wird ein Teil der aufwachsenden Filterschicht ständig durch den Feststoff-Strömungskanal in die Brennkammer abgezogen. Da die ausgefilterten Stoffe (Asche und Restkokspartikel) teilweise noch brennbar sind, werden sie in der Brennkammer verbrannt. Hierzu ist vorzugsweise die Brennkammer über einen aufwärts zur Filterkammer gerichteten Feststoff-Strömungskanal mit der Filterkammer verbunden. Der untere Endabschnitt des Feststoff-Strömmungskanals weist eine Siphonvorrichtung auf, um Material aus der Filterkammer in die Brennkammer zu befördern.

Der Abzug der Filterschicht erfolgt gemäß einer weiteren bevorzugten Ausgestaltung über eine erste Ausblasvorrichtung am unteren Endabschnitt des Feststoff-Strömungskanals. Hierbei ist der Feststoff-Strömungskanal vorzugsweise senkrecht, aber immer so geneigt und dimensioniert, daß beim Freiblasen des unteren Ausblasabschnitts des Feststoff-Strömungskanals der Feststoff unter der Wirkung der Gravitationskraft von selbst nach unten nachrutscht.

Vorzugsweise ist am oberen Endabschnitt des Feststoff-Strömungskanals eine zweite Ausblasvorrichtung vorgesehen. Diese dient dazu, die Filterschicht umzuschichten und/oder aufzulockern.

Durch dem Fachmann bekannte Maßnahmen der Steuer- und Regeltechnik und speziell über die Messung der Gasdrücke wird ermittelt, wann und wie häufig die Ausblasvorrichtungen betätigt werden müssen, um einen optimalen Wirkungsgrad zu erhalten.

Der besondere Vorteil der Erfindung besteht darin, daß je nach Einstellung der Druckverhältnisse entweder mehr Gas oder mehr Rauchgas (Wärme) erzeugbar ist. Die Einstellung des gewünschten Gas/Rauchgasverhältnisses erfolgt vorzugsweise mittels einer Rauchgasregelvorrichtung, z. B. durch eine Querschnittsänderung des Rauchgasaustrittskanals, die durch eine Rauchgasklappe erreicht werden kann.

Bei einer Weiterbildung nach Anspruch 7 ist die Wirbelschichtvergasungskammer räumlich über der Filterkammer und die Filterkammer über der Brennkammer angeordnet. Diese Anordnung führt zu einer sehr kompakten Bauweise mit einer guten Energiebilanz.

Bei einer Weiterbildung nach Anspruch 8 ist eine zusätzliche Wärmetauschereinrichtung vorgesehen, die die Abwärme des abziehenden Rauchgases aufnimmt und an das Produktgas abgibt, was ebenfalls die Energiebilanz verbessert.

Bei einer Weiterbildung nach Anspruch 9 sind an den Wärmetauscherabschnitte der Wärmeleitrohre Wärmetauscherrippen angeordnet. Diese sind so geformt, um mit den von den Fluidisierungsvorrichtungen erzeugten Fluidströmen und - wirbeln so in Wirkbeziehung zu gelangen, daß die fluidisierten Teilchen quer zu ihrer ursprünglichen Strömungsrichtung beschleunigt werden. So wird eine gute Quervermischung des Wirbelschichtbettes erzielt, die Verweilzeit der Teilchen im Wirbelschichtbett wird erhöht, Gasblasen werden gut dispergiert und der Wärmeübergang von den Wärmetauscherrippen zum Wirbelschichtbett wird wesentlich verbessert. Auch läßt sich hierdurch eine kompakte Bauform erzielen.

Für den Einsatz in einer Vorrichtung zum Erzeugen von Brenngas aus kohlenstoffhaltiger Einsatzstoffen gemäß der vorliegenden Erfindung ist besonders ein Wirbelschichtreaktor geeignet. In einem solchen Wirbelschichtreaktor ist ein Reaktorbehälter vorgesehen, der das Wirbelschichtbett aufnimmt. Es sind Fluidisierungsvorrichtungen vorgesehen, die einen vorbestimmten Bereich des Wirbelschichtbettes fluidisieren. Um in diesen Bereich zusätzliche Wärme einzubringen oder abzuziehen, werden Wärmetauschervorrichtungen eingesetzt. Je besser der Wärmeübergang zwischen den Wärmetauschervorrichtungen und der Wirbelschicht ist, um so höher ist der Wirkungsgrad der Anlage. Um diesen Wärmeübergang zu verbessern, werden die Wärmetauscherabschnitte der Wärmetauschervorrichtung als spezielle Wärmetauscherrippen ausgebildet, die so geformt und angeordnet sind, um mit den von den Fluidisierungsvorrichtungen erzeugten Fluidströmen und -wirbeln so in Wirkbeziehung zu gelangen, daß die fluidisierten Teilchen quer zu ihrer ursprünglichen Strömungsrichtung beschleunigt werden, wodurch die Quervermischung des Wirbelschichtbettes verbessert wird, die Verweilzeit der Teilchen im Wirbelschichtbett erhöht wird und der Wärmeübergang von den Wärmetauscherrippen zum Wirbelschichtbett wesentlich verbessert wird.

Durch den Einsatz eines solchen Wirbelschichtreaktors lassen sich bei gleicher Leistung durch den verbesserten Wärmeübergang kleinere und kostengünstigere Baugrößen darstellen. Ein derartiger Wirbelschichtreaktor kann sowohl in der Brennkammer als auch im Brenngasreaktor der Vorrichtung zum Erzeugen von Brenngas aus kohlenstoffhaltigen Einsatzstoffen eingesetzt werden.

Es ist zu betonen, daß es nicht möglich und sinnvoll ist, eine konkrete Dimensionierung für die speziellen Wärmetauscherrippen anzugeben, da der Fachmann eine derartige Optimierung nur in Verbindung mit einem konkreten Wirbelschichtreaktor vornehmen kann. Es ist daher im Einzelfall möglich, sehr speziell ausgebildete Wärmetauscherrippen einzusetzen, die u. U. sogar unterschiedlich, asymmetrisch usw. ausgebildet sein können, wenn dadurch die vorstehend beschriebene Ablenkung der Teilchen mit den damit verbundenen positiven Wirkungen erfolgt.

Die Erfindung wird nachfolgend an Hand von zwei Ausführungsbeispielen in Verbindung mit beigefügten Zeichnungen näher erläutert.
Fig. 1 zeigt eine Schnittdarstellung einer ersten Ausführungsform der Erfindung.
Fig. 2 zeigt eine Schnittdarstellung einer zweiten Ausführungsform der Erfindung.
Fig. 3 zeigt die Wirkung der oberen Ausblasdüse.
Fig. 4 zeigt die Wirkung der unteren Ausblasdüse.
Fig. 5 zeigt eine perspektivische Darstellung einer gewendelten Wärmetauscherrippe am Wärmetauscherabschnitt einer Wärmetauschervorrichtung.
Fig. 6 zeigt eine perspektivische Darstellung einer schaufelförmig ausgebildeten Wärmetauscherrippe.
Fig. 7 zeigt eine perspektivische Funktionsdarstellung der Wärmetauscherrippe nach Fig. 6.
Fig. 8 zeigt Wärmetauscherrippen, die an waagerecht liegenden Wärmetauscherabschnitten angeordnet sind.

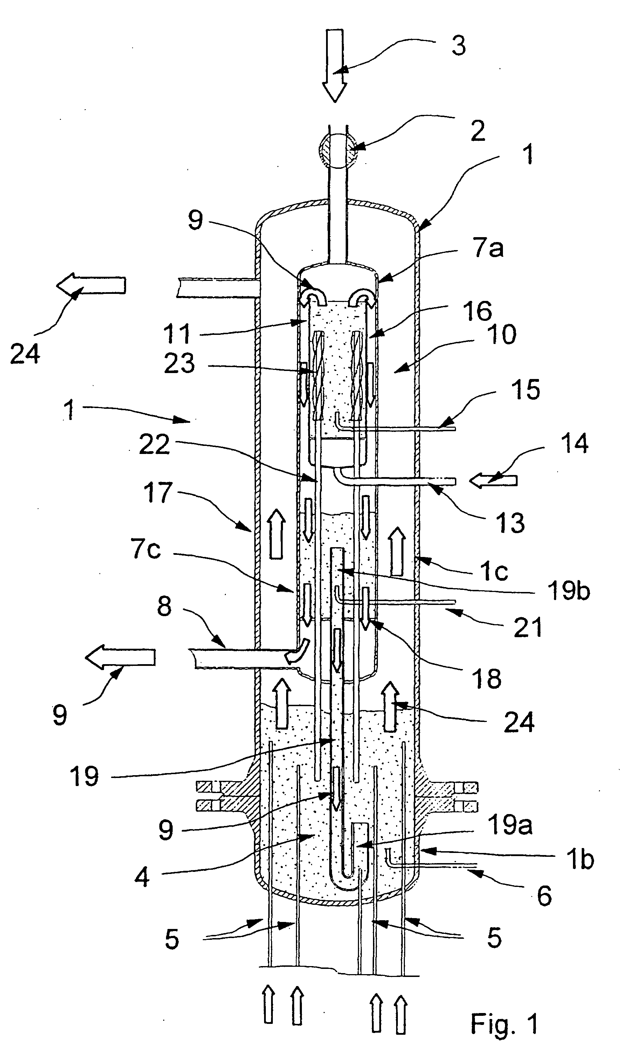

Die Fig. 1 zeigt eine erste Ausführungsform der Erfindung. Ein erster rohrförmiger Behälter 1 hat an seinem oberen Endabschnitt 1a eine druckfeste Schleuse 2 zur Einbringung der zu vergasenden Einsatzstoffe 3, die mittels des Pfeils symbolisch dargestellt sind. Im unteren Endabschnitt 1b des Behälters 1 ist eine Wirbelschicht-Brennkammer 4 vorgesehen, in die Dampf- und/oder Luftgemischzufuhrdüsen 5 hineinragen. Zum Anfahren, d.h. zum Anheizen, ist innerhalb der Wirbelschicht-Brennkammer 4 eine Brennstoffzufuhrdüse 6 zum Einblasen von Brenngas angeordnet, mit dem die Wirbelschicht-Brennkammer 4 angeheizt wird.

Ein zweiter rohrförmiger Behälter 7 ist konzentrisch in dem Behälter 1 angeordnet und erstreckt sich vom oberen Endabschnitt 1a bis zur Wirbelschicht-Brennkammer 4. Dieser Behälter 7 ist an seinem oberen Endabschnitt 7a mit dem Ausgang der Schleuse 2 dicht verbunden. Am unteren Endabschnitt 7b des Behälters 7 ist ein Brenngasauslaß 8 zur Ableitung des gewonnenen Brenngases 9 angeordnet, der keine Verbindung zum Innenraum des Behälters 1 hat.

Im oberen Abschnitt des Behälters 7 ist eine Wirbelschichtvergasungskammer 10 angeordnet, die nachfolgend beschrieben wird.

Die Wirbelschichtvergasungskammer 10 ist ein oben offenes, rohrförmiges Gefäß 11. Das Gefäß 11 ist so angeordnet, daß die über die Schleuse 2 eingebrachten Einsatzstoffe 3 in das Gefäß 11 fallen. Am unteren Endabschnitt 11a des Gefäßes 11 ist ein Lochboden 12 angeordnet und darunter ist eine Wasserdampf-Einlaßdüse zum Einleiten von überhitztem Wasserdampf vorgesehen. Oberhalb des Lochbodens 12 ist eine Brennstoffzufuhrdüse 15 angeordnet, die zum Eintragen von Brennstoff dient, der zum Anfahren und ggf. zur Steuerung der Vergasung benötigt wird.

Die Wirbelschichtvergasungskammer 10 ist in dem Behälter 7 konzentrisch so angeordnet, daß der verbleibende Ringspalt 16 einen vorbestimmten Querschnitt aufweist.

Im unteren Abschnitt des Behälters 7 ist eine Filterkammer 17 angeordnet, die nachfolgend beschrieben wird.

Die Filterkammer 17 besteht aus einem Wandungsabschnitt 7c des zweiten rohrförmigen Behälters 7 und einem Filterkammerlochboden 18, der über dem Brenngasauslaß 8 angeordnet ist. Ein Feststoff-Strömungskanal 19 ist rohrförmig ausgebildet und erstreckt sich von der Filterkammer 17 durch den Filterkammerlochboden 18 bis in die Wirbelschicht-Brennkammer 4, wobei der untere Abschnitt 1 9a des Feststoff-Strömungskanals 19 nach oben gekrümmt ist. In diesen Abschnitt 19a ragt eine nach oben gerichtete untere Ausblasdüse 20, deren Funktion später erläutert wird. Eine weitere, nach oben gerichtete obere Ausblasdüse 21 ist in dem oberen Abschnitt 19b des Feststoff-Strömungskanal 1 9 angeordnet.

Von der Wirbelschicht-Brennkammer 4 über die Filterkammer 17 bis zu der Wirbelschichtvergasungskammer 10 erstrecken sich Wärmeleitrohre 22 (Heat-pipes), wobei die in die Wirbelschicht-Brennkammer 4 hineinragenden Endabschnitte der Wärmeleitrohre 22 Wärme aufnehmen und die in die Wirbelschichtvergasungskammer 10 hineinragenden Endabschnitte die Wärme dort wieder abgeben, um die erforderliche Vergasungstemperatur zu erzeugen.

Im vorliegenden Beispiel sind an den Endabschnitten der Wärmeleitrohre 22, die in die Wirbelschichtvergasungskammer 10 hineinragenden, wendelförmige Wärmetauscherrippen 23 angeordnet, so daß durch die aufwärtsgerichtete Dampf- und Bettmaterialströmung eine Querbeschleunigung erzeugt wird, wodurch nicht nur entstehende Blasen dispergiert werden, sondern auch eine Quervermischung im Vergaserbett erreicht wird, durch die die Verweilzeit der Brennstoffpartikel im Vergaserbett verlängert und damit der Umsatz bei der Vergasung erhöht wird. Weiterhin wird der Wärmeübergang zwischen den Wärmetauscherrippen 23 und dem Vergaserbett wesentlich verbessert.

Nachfolgend wird der Vergasungsprozeß beschrieben:

Die Vergasungswirbelschicht mit den Einsatzstoffen 3 wird mit überhitztem Wasserdampf fluidisiert, der über den Lochboden 12 eingebracht wird, so daß eine gute Durchmischung der Wirbelschicht und der über die Schleusenvorrichtung eingebrachten Festbrennstoffe gewährleistet ist. Die prinzipielle Funktionsweise einer Wirbelschichtvergasung ist dem Fachmann bekannt und wird daher hier nicht detailliert erläutert.

Der hohe Wärmeübergang von den Wärmeeintragsabschnitten 22 der Wärmeleitrohren 22 auf die Wirbelschicht garantiert eine hohen Wärmeeintrag in die Wirbelschichtvergasungskammer. Eine hohe Überhitzung des eingebrachten Wasserdampfes gewährleistet zusätzlich, daß für die Pyrolyse Temperaturen zwischen 500°C und 700°C und für die Vergasung Temperaturen bis 800°C im Vergasungsbett aufrecht erhalten werden können. Diese hohen Temperaturen führen zunächst zur Freisetzung flüchtiger Bestandteile der Brennstoffe und schließlich zur Umsetzung der freigesetzten Kohlenwasserstoffe (homogene Wasserdampfvergasung) und des Restkokses (heterogene Wasserdampfvergasung). Ein Wasserdampfüberschuß begünstigt die Umsetzung des zuvor gebildeten Kohlenmonoxids mit Wasserdampf in Kohlendioxid und Wasserstoff, wodurch der für die Nutzung in Brennstoffzellen wichtige Wasserstoffanteil zusätzlich erhöht wird.

Die in der Wirbelschichtvergasungskammer 10 gebildeten Brenngase 9 werden gemäß den Richtungen der Brenngas-Pfeile 9 durch den Ringspalt 16 in die Filterkammer 17 übergeleitet, in der zunächst Kokspartikel und Aschepartikel abgeschieden werden. Beim Durchströmen des Brenngases 9 durch das Filterfestbett reagiert das Brenngas mit noch nicht umgesetztem Wasserdampf, wodurch der Umsatz, unterstützt durch die katalytische Wirkung des Restkoks, weiter gesteigert wird.

Ein Teil des Brenngases 9 strömt über den Feststoff-Strömungskanal 19 in die Wirbelschicht-Brennkammer 4 und ein anderer Teil strömt über den Filterkammerlochboden 18 direkt in den Brenngasauslaß 8, um einer externen Nutzung zugeführt zu werden. Die Aufteilung der zwei Brenngasmengenströme wird durch den Druckverlust des Brenngases in dem Feststoff-Strömungskanal 19 bestimmt und weiterhin durch die Druckniveaus, die in der Filterkammer 17, der Leitung des Brenngasauslasses 8 und in der Wirbelschicht-Brennkammer 4 anliegen.

Die Überführung von Aschepartikeln und Restkokspartikeln aus der Filterschicht der Filterkammer 17 in die Wirbelschicht-Brennkammer 4 wird dadurch realisiert, daß stoßweise aus dem Abschnitt 1 9a des Feststoff-Strömungskanals 19 Filterbettmaterial ausgetragen wird. Dazu wird die Ausblasdüse 20 aktiviert.

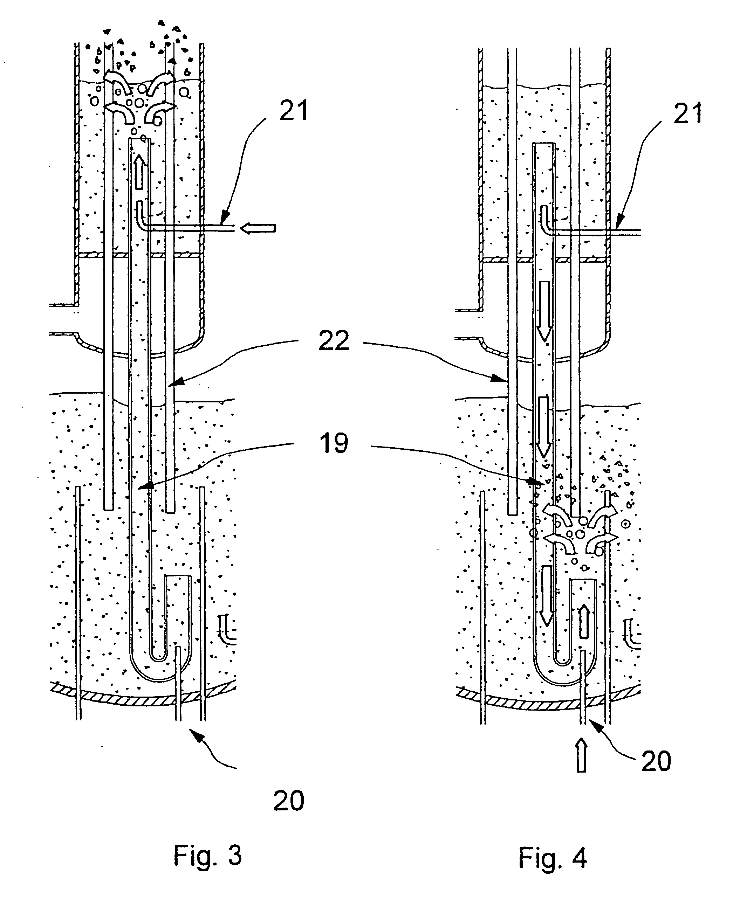

Um Bettmaterial aus dem Feststoff-Strömungskanal 19 in die Filterschicht der Filterkammer 17 auszutragen, wird über die Ausblasdüse 21 Dampf eingeblasen, vergleiche Fig. 3. So wird erreicht, daß das Bettmaterial lagertweise die abgelagerte Asche und die Restkokspartikel bedeckt.

Das in die Wirbelschicht-Brennkammer 4 eingetragene Brenngas 9 wird zusammen mit den im Filterbett abgeschiedenen Teeren und Restkoksanteilen verbrannt. Ein Teil der dabei freigesetzten Wärme wird an die Wärmeaufnahmeabschnitte der Wärmeleitrohre 22 abgegeben, die die Wärme zu der Wirbelschichtvergasungskammer 10 leiten.

Der Rest der Wärme wird als fühlbare Wärme mit dem Rauchgas 24 aus der Wirbelschicht-Brennkammer 4 ausgetragen und außerhalb der Vorrichtung zur Heißdampferzeugung verwendet. Dieser Heißdampf wird ganz oder teilweise als Vergasungs- und Fluidisierungsmittel in die Vorrichtung zurückgeführt.

In der Wirbelschicht-Brennkammer 4 und in der Wirbelschichtvergasungskammer 10 sind bei dem vorliegenden Ausführungsform zusätzlich Düsen 6 und 15 für die Einleitung von flüssigen oder gasförmigen Brennstoffen vorgesehen. Diese Düsen dienen vor allem zum Hochheizen der Vorrichtung während des Anfahrprozesses, um zum Beispiel flüssige biogene Brennstoffe einsetzen zu können oder um in externen Prozessen anfallende Brenngase oder flüssige Brennstoffe verwerten zu können. Dies ist insbesondere dann sinnvoll, wenn zum Beispiel beim Betrieb von Brennstoffzellen in Verbindung mit der Vergasungsvorrichtung in zwischengeschalteten Trennprozessen Wasserstoff abgetrennt wird und die anderen im Brenngas enthaltenen Bestandteile (Kohlenmonoxid, Methan und höhere Kohlenwasserstoffe) zur Wärmeerzeugung zurückgeführt werden sollen.

Für die Erzeugung von Warmwasser, Sattdampf oder überhitztem Dampf können Dampferzeugerrohre z. B. als Rippenrohre oder Tauchheizflächen ganz oder teilweise auch in die Wirbelschicht-Brennkammer integriert werden.

Ferner ist zu erwähnen, daß die Wirbelschicht-Brennkammer eine herkömmliche Ascheabfuhreinrichtung aufweist.

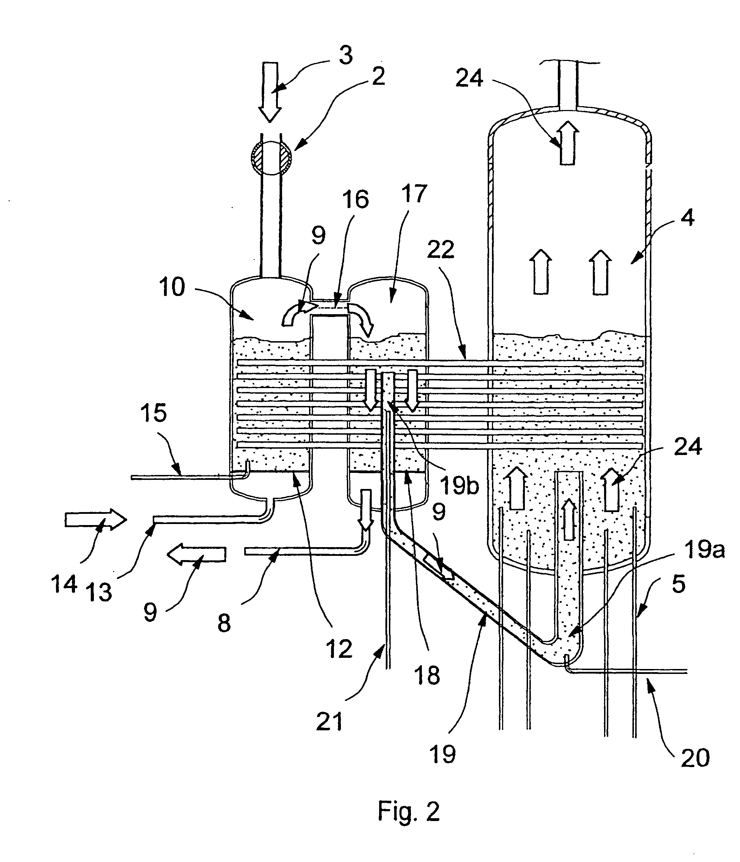

Die Fig. 2 zeigt eine weitere Ausführungsform der Erfindung. Bei dieser Ausführungsform sind die Wirbelschichtvergasungskammer 10, die Filterkammer 17 und die Wirbelschicht-Brennkammer 4 nebeneinander angeordnet und ebenfalls über die Wärmeleitrohre 22 thermisch gekoppelt. Gleiche Funktionselemente sind mit den gleichen Bezugszeichen versehen. Bei einer mit der ersten Ausführungsform übereinstimmenden Funktion wird auf eine nochmalige Erläuterung verzichtet und hiermit auf die Erläuterung zu Fig. 1 verwiesen.

Durch die druckfeste Schleuse 2 werden die zu vergasenden Einsatzstoffe 3 eingebracht und wie bei der ersten Ausführungsform vergast. Das Brenngas 9 tritt über den Kanal 16' in die Filterkammer 17 über, durchströmt diese und tritt aus dem Brenngasauslaß 8 gefiltert aus. Ein Teil des Brenngases wird
durch den Feststoff-Strömungskanal 19 geleitet und in der WirbelschichtBrennkammer 4 verbrannt.

Wie in der ersten Ausführungsform sind in den Endabschnitten 19a des Feststoff-Strömungskanals 19 Ausblasdüsen 20 und 21 angeordnet.

Die Fig. 3 zeigt die Funktion der oberen Ausblasdüse 21. Die Pfeile zeigen, wie das Material aufgewirbelt und umgeschichtet wird.

Die Fig. 4 zeigt die Funktion der unteren Ausblasdüse 20. Die Pfeile zeigen, wie Filtermaterial aus der Filterkammer abgezogen und der Brennkammer zum Verbrennnen zugeführt wird.

Abschließend soll noch erwähnt werden, daß die spezielle Art des Materialaustrags mittels der Ausblasdüsen 20 und 21 durch eine mechanische Austragvorrichtung ersetzt werden könnte. Derartige Austragvorrichtung, z. B. Förderschnecken sind jedoch teurer als Blasdüsen und unter den vorherrschenden Betriebsbedingungen störanfällig, so daß die Lösung mit den Blasdüsen bevorzugt ist.

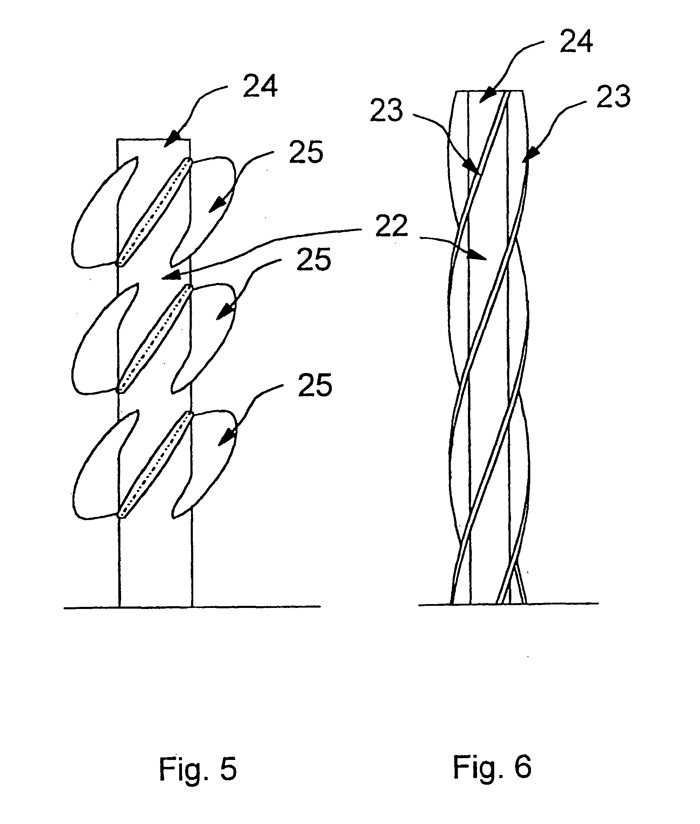

Nachfolgend werden anhand der Figuren 5 bis 8 unterschiedliche Ausführungsformen von Heiz- oder Kühlrippen an den Wärmetauscherabschnitten der Wärmeleitrohre beschrieben. Diese Heiz- und Kühlrippen sind für Wirbelschichtreaktoren und damit auch für die Wirbelschichtvergasungskammer 10 und die Wirbelschicht-Verbrennungskammer 4 besonders geeignet.

Fig. 5 zeigt einen Endabschnitt 24 einer Wärmetauschervorrichtung, insbesondere in Form eines Wärmeleitrohrs 22 an dem schaufelförmig ausgebildete Wärmetauscherrippen 25 angeordnet sind.

Die Fig. 6 zeigt einen Endabschnitt 24 einer rohrförmigen Wärmetauschervorrichtung bzw. eines Wärmeleitrohrs 22, an dem gewendelte Wärmetauscherrippen 23 angeordnet sind.

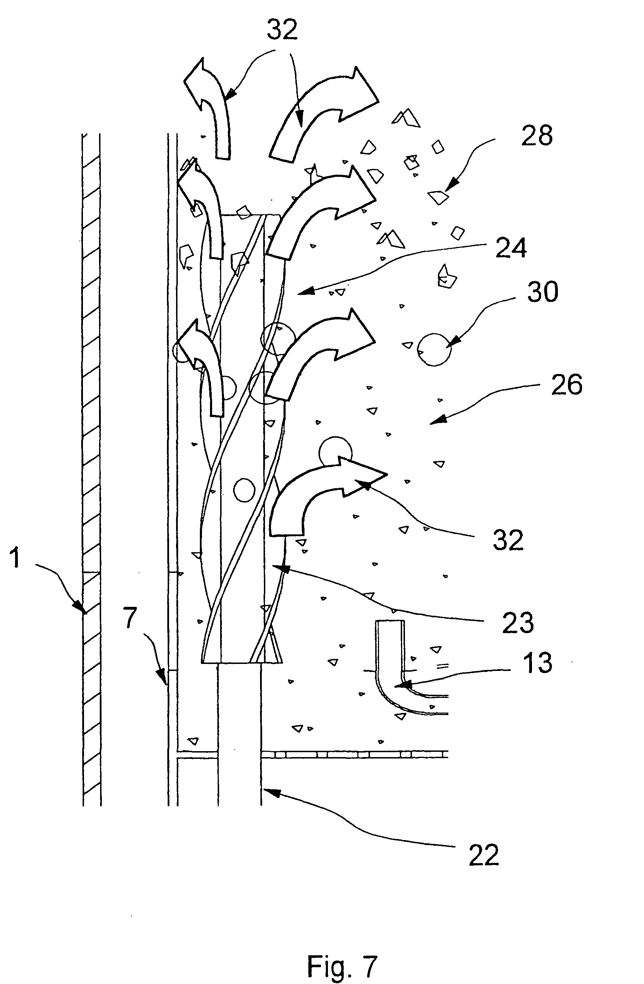

Die Fig. 7 zeigt den rohrförmigen Endabschnitt 24 einer Wärmetauschervorrichtung- 22 mit gewendelten Wärmetauscherrippen 23 (wie Fig. 6) in einer Wirbelschicht 26, die z. B. aus Brennstoffteilchen 28 besteht, in der Gasblasen 30 aufsteigen. Die Pfeile 32 zeigen, in welche Richtung die Brennstoffteilchen 28 und die Gasblasen 30 abgelenkt werden. Die Wirbelschicht 26 ist einem Reaktorbehälter angeordnet, der dem rohrförmigen Behälter 7 in Fig. 1 entspricht. Seitlich ist noch der äußere Behälter 1 aus Fig. 1 dargestellt. Fig. 7 stellt damit ein Detail von Fig. 1 dar.

Durch diese seitliche Ablenkung wird die Wirbelschicht 26 homogenisiert. Gleichzeitig verbleiben die Brennstoffteilchen 28 länger im Wirbelbett, so daß sie vollständig verbrannt werden. Auch bei anderen Reaktionen, wie z. B. einer Vergasung, ist eine längere Verweildauer der Einsatzstoffe gewünscht. Durch die seitliche Ablenkung haben die Teilchen einen sehr guten Wärmekontakt mit zu den Wärmetauscherrippen 23, wodurch der Wärmeübergang erheblich verbessert und somit der Wirkungsgrad erhöht wird.

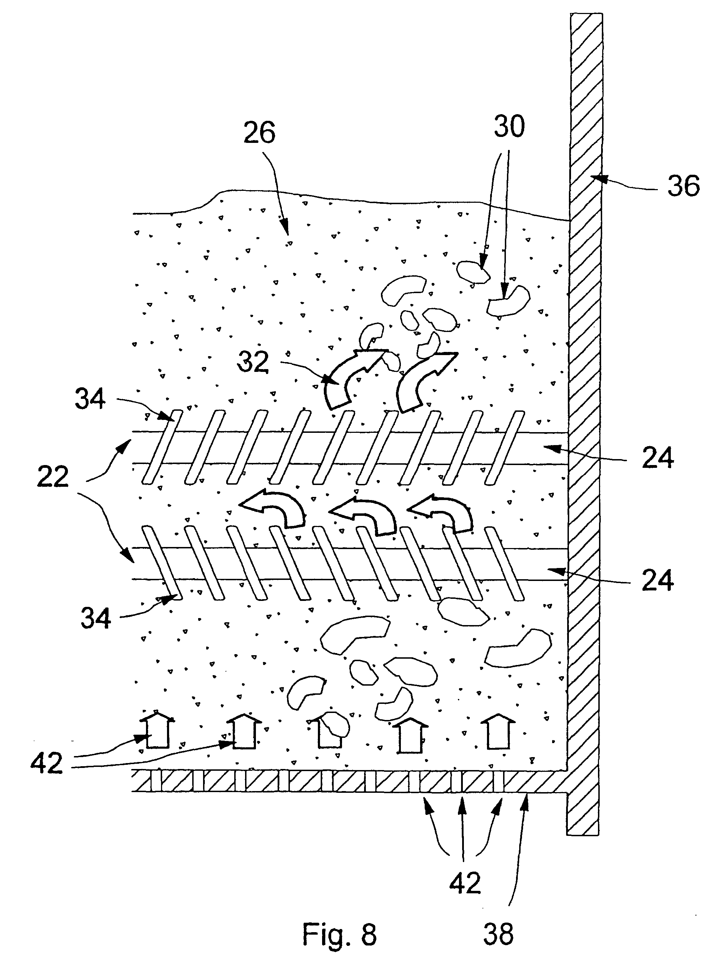

Die Fig. 8 zeigt einen Ausschnitt eines Wirbelschichtreaktors mit waagerecht liegenden Wärmetauscherrohren 22 mit Wärmetauscherabschnitten 24, an denen Wärmetauscherrippen 34 angeordnet sind. Die Wärmetauscherabschnitte 24 ragen horizontal in die Wirbelschicht 26, die in einem Reaktorbehälter 36 angeordnet ist. Der Reaktorbehälter 36 umfaßt eine Bodenplatte, die als Lochboden 38 mit Löchern 40 ausgebildet ist. Durch die Löcher 40 zusammen mit Pfeilen 42 wird eine Fluidisierungsvorrichtung dargestellt.

Hier sind die Wärmetauscherrippen 34 geneigt angeordnet, wobei die Neigungsrichtung der Wärmetauscherrippen 34 bei dem darüberliegenden Wärmetauscherabschnitt 24 gewechselt wurde. Daher werden die Teilchen 28 und die Dampfblasen 30 wechselweise nach links oder rechts abgelenkt, was zu einer guten Quervermischung führt.

## Patentansprüche

1. Vorrichtung zum Erzeugen von Brenngas aus kohlenstoffhaltigen, insbesondere biogenen Einsatzstoffen durch allotherme Wasserdampfvergasung, wobei die Vorrichtung folgende Merkmale aufweist:
- eine druckaufgeladene Wirbelschichtvergasungskammer (10) mit einer druckfesten Schleuse (2) zur Aufgabe der zu vergasenden Einsatzstoffe (3),
- eine Filterkammer (17), die über einen Verbindungskanal (16, 16') mit der Wirbelschichtvergasungskammer (10) verbunden ist,
- einer externen Wärmequelle (4) und
- einer Wärmeleitrohranordnung (22), die Wärme aus der externen Wärmequelle (4) aufnimmt und in der Wirbelschichtvergasungskammer (10) an das Vergasungsbett abgibt.

2. Vorrichtung nach Anspruch 1, **dadurch gekennzeichnet,**
**dass** die externe Wärmequelle (4), eine Brennkammer, insbesondere eine Wirbelschicht-Brennkammer (4) ist und eine Rauchgasableitung (24) aufweist.

3. Vorrichtung nach Anspruch 2, **dadurch gekennzeichnet,**
**dass** die Brennkammer, insbesondere die Wirbelschicht-Brennkammer (4) über einen aufwärts zur Filterkammer (17) gerichteten Feststoff-Strömungskanal (19) mit der Filterkammer (17) verbunden ist,
**dass** der Feststoff-Strömungskanal (19) einen unteren Endabschnitt (19a) aufweist, der mit der Brennkammer (4) verbunden ist,
**dass** der Feststoff-Strömungskanal (19) einen oberen Endabschnitt (19b) aufweist, der mit der Filterkammer (17) verbunden ist, und
**dass** am unteren Endabschnitt (19a) eine Siphonvorrichtung angeordnet ist.

4. Vorrichtung nach Anspruch 3, **dadurch gekennzeichnet, dass** in dem unteren Endabschnitt (19a) eine erste Blasvorrichtung (20) angeordnet ist, um mittels Sogwirkung gesteuert Feststoffe vorzugsweise pulsierend aus dem Filterbett der Filterkammer (17) in das Brennstoffbett der Brennkammer (4) abzuziehen.

5. Vorrichtung nach Anspruch 3 oder 4, **dadurch gekennzeichnet, dass** in dem oberen Endabschnitt (19b) des Feststoff-Strömungskanals (19) oder in der Filterkammer (17) eine zweite Blasvorrichtung (21) angeordnet ist, um gesteuert das Filterbett der Filterkammer (17) umzuschichten und/oder aufzulockern.

6. Vorrichtung nach einem der vorhergehenden Ansprüche 2 bis 5, **dadurch gekennzeichnet, dass** eine Rauchgasregelvorrichtung in der Rauchgasableitung (24) zur Einstellung des Verhältnisses von Rauchgas zu Produktgas vorgesehen ist.

7. Vorrichtung nach einem der vorhergehenden Ansprüche, **dadurch gekennzeichnet, dass** die Wirbelschichtvergasungskammer (10) über der Filterkammer (17) und die Filterkammer (17) über der Brennkammer (4) angeordnet sind.

8. Vorrichtung nach einem der vorhergehenden Ansprüche, **dadurch gekennzeichnet, dass** eine zusätzliche Wärmetauschereinrichtung vorgesehen, die die Abwärme des abziehenden Rauchgases (24) aufnimmt und an das Produktgas abgibt.

9. Vorrichtung nach einem der vorhergehenden Ansprüche, **dadurch gekennzeichnet, dass** die Wärmetauscherabschnitte (24) der Wärmeleitrohre (22) Wärmetauscherrippen (23; 25; 34) aufweisen, die so geformt und angeordnet sind, um mit den von den Fluidisierungsvorrichtungen erzeugten Fluidströmen und -wirbeln so in Wirkbeziehung zu gelangen, daß die fluidisierten Teilchen (28) quer zu ihrer ursprünglichen Strömungsrichtung beschleunigt werden, wodurch die Quervermischung des Wirbelschichtbettes verbessert wird, die Verweilzeit der Teilchen im Wirbelschichtbett erhöht wird, Gasblasen (30) gut dispergiert werden und der Wärmeübergang von den Wärmetauscherrippen (23; 25; 34) zum Wirbelschichtbett (26) wesentlich verbessert wird.

## Claims

1. A facility for producing combustible gas from carbon-containing, in particular biogenic feed materials by allothermic steam gasification, the facility having the following features:
- a pressure-supercharged fluidized-bed gasification chamber (10) with a pressure-tight lock (2) for supplying the feed materials (3) which are to be gasified,
- a filter chamber (17) which is connected to the fluidized-bed gasification chamber (10) via a connecting channel (16, 16'),
- an external heat source (4), and
- a heat-pipe arrangement (22) which takes up heat from the external heat source (4) and gives it off to the gasification bed in the fluidized-bed gasification chamber (10).

2. The facility as claimed in claim 1, **characterized in that** the external heat source (4) is a combustion chamber, in particular a fluidized-bed combustion chamber (4), and has a flue-gas discharge line (24).

3. The facility as claimed in claim 2, **characterized in that** the combustion chamber, in particular the fluidized-bed combustion chamber (4), is connected to the filter chamber (17) via a solids flow channel (19) which is directed upward to the filter chamber (17),
**in that** the solids flow channel (19) has a bottom end section (19a) which is connected to the combustion chamber (4),
**in that** the solids flow channel (19) has a top end section (19b) which is connected to the filter chamber (17), and
**in that** a siphon arrangement is arranged at the bottom end section (19a).

4. The facility as claimed in claim 3, **characterized in that** a first blowing arrangement (20) is arranged in the bottom end section (19a) in order by means of suction action, in a controlled manner, for solids to be drawn off into the fuel bed of the combustion chamber (4) from the filter bed of the filter chamber (17), preferably with pulsating action.

5. The facility as claimed in claim 3 or 4, **characterized in that** a second blowing arrangement (21) is arranged in the top end section (19b) of the solids flow channel (19) or in the filter chamber (17) in order to rearrange and/or loosen the filter bed of the filter chamber (17) in a controlled manner.

6. The facility as claimed in one of the preceding claims 2 to 5, **characterized in that** a flue-gas-regulating arrangement is provided in the flue-gas discharge line (24) in order to adjust the ratio of flue gas to product gas.

7. The facility as claimed in one of the preceding claims, **characterized in that** the fluidized-bed gasification chamber (10) is arranged above the filter chamber (17) and the filter chamber (17) is arranged above the combustion chamber (4).

8. The facility as claimed in one of the preceding claims, **characterized in that** there is provided an additional heat exchanger, which takes up the waste heat of the drawing-off flue gas (24) and gives it off to the product gas.

9. The facility as claimed in one of the preceding claims, **characterized in that** the heat-exchanger sections (24) of the heat pipes (22) have heat-exchanger ribs (23; 25; 34) which are formed and arranged so as to assume an operative relationship with the streams and vortices of fluid produced by the fluidizing arrangements, such that the fluidized particles (28) are accelerated transversely to their original flow direction, as a result of which transverse mixing of the fluidized bed is improved, the residence time of the particles in the fluidized bed is increased, gas bubbles (30) are well dispersed, and the heat transfer from the heat-exchanger ribs (23; 25; 34) to the fluidized bed (26) is improved to a considerable extent.

## Revendications

1. Dispositif permettant la production de gaz combustible à partir de matières contenant du carbone, en particulier biogènes, par gazéification à la vapeur d'eau allothermique, le dispositif présentant les caractéristiques suivantes :
- une chambre de gazéification à lit fluidisé sous pression (10) avec un sas à l'épreuve de la pression (2) pour alimenter les matières à gazéifier (3),
- une chambre de filtration (17) qui est reliée à la chambre de gazéification à lit fluidisé (10) par l'intermédiaire d'une gaine de liaison (16, 16'),
- une source de chaleur (4) externe et
- une disposition de tubes conducteurs de chaleur (22), qui absorbent la chaleur de la source de chaleur externe (4) et la cèdent au lit de gazéification dans la chambre de gazéification à lit fluidisé (10).

2. Dispositif selon la revendication 1, **caractérisé en ce que** la source de chaleur externe (4) est une chambre à combustion, en particulier une chambre à combustion à lit fluidisé (4) et présente une conduite d'évacuation des fumées (24).

3. Dispositif selon la revendication 2, **caractérisé en ce que**
la chambre de combustion, en particulier la chambre de combustion à lit fluidisé (4) est reliée à la chambre de filtration (17) par l'intermédiaire d'une gaine d'écoulement des matières solides dirigée vers le haut vers la chambre de filtration (17),
la gaine d'écoulement des matières solides (19) présente un tronçon terminal (19a) qui est relié à la chambre de combustion (4),
la gaine d'écoulement des matières solides (19) présente un tronçon terminal (19b) qui est relié à la chambre de filtration (17) et
un dispositif de siphon est disposé sur le tronçon terminal inférieur (19a).

4. Dispositif selon la revendication 3, **caractérisé en ce que**, dans le tronçon terminal inférieur (19a) est disposé un premier dispositif de soufflage (20) pour retirer, de manière pilotée, au moyen d'un effet de succion (20) des substances solides, de préférence de manière pulsée, hors du lit de filtration de la chambre de filtration (17) vers le lit de combustible de la chambre de combustion (4).

5. Dispositif selon la revendication 3 ou 4, **caractérisé en ce que**, dans le tronçon terminal supérieur (19b) de la gaine d'écoulement des matières solides (19) ou dans la chambre de filtration (17), est disposé un deuxième dispositif de soufflage pour retourner et/ou aérer, de manière pilotée, le lit de filtration de la chambre de filtration (17)

6. Dispositif selon l'une quelconque des revendications 2 à 5, **caractérisé en ce qu'**un dispositif de réglage des fumées dans la conduite d'évacuation des fumées (24) est prévu pour ajuster le rapport entre les fumées et le gaz produit.

7. Dispositif selon l'une quelconque des revendications précédentes, **caractérisé en ce que** la chambre de gazéification à lit fluidisé (10) est disposée au-dessus de la chambre de filtration (17) et la chambre de filtration (17) au-dessus de la chambre de combustion (4).

8. Dispositif selon l'une quelconque des revendications précédentes, **caractérisé en ce qu'**un dispositif supplémentaire d'échange de chaleur est prévu qui absorbe la chaleur dissipée des fumées (24) évacuées et la cède au gaz produit.

9. Dispositif selon l'une quelconque des revendications précédentes, **caractérisé en ce que** les tronçons de l'échangeur de chaleur (24) des tubes conducteurs de chaleur (22) présentent des nervures d'échangeur de chaleur (23 ; 25 ; 34) qui sont formées et disposées de manière à entrer en relation fluidisée avec les courants et les tourbillons de fluide produits par les dispositifs de fluidisation, de manière à ce que les particules fluidisées (28) soient accélérées transversalement à leur direction d'écoulement d'origine, moyennant quoi le mélange transversal du lit fluidisé est amélioré, le temps de séjour des particules dans le lit fluidisé est augmenté, les bulles de gaz (30) sont bien dispersées et le transfert de chaleur des nervures d'échangeur de chaleur (23 ; 25 ; 34) vers le lit fluidisé (26) est nettement amélioré.
